# EUROPÄISCHE PATENTSCHRIFT

(11) **EP 0 376 887 B1**
(45) Veröffentlichungstag und Bekanntmachung des Hinweises auf die Patenterteilung: **14.07.1993**
(21) Anmeldenummer: 89810962.4
(22) Anmeldetag: 14.12.1989
(51) Int. Cl.: B21B 37/00, B21B 37/10, G01J 5/00

(54) **Verfahren und Vorrichtung zum Regeln der Planheit eines kaltgewalzten Metallbandes**
Method and device for controlling the flatness of cold-rolled metal strip
Procédé et dispositif pour régler la planéité d'une bande métallique laminée à froid

(30) Priorität: 30.12.1988 CH 4857/88
(43) Veröffentlichungstag der Anmeldung: 04.07.1990
(73) Patentinhaber: ALUSUISSE-LONZA SERVICES AG, 8034 Zürich (CH)
(72) Erfinder: Dean, Robert Joel, CH-8248 Uhwiesen (CH)

(56) Entgegenhaltungen:
- DE-A- 2 747 729
- DE-A- 3 735 022
- US-A- 3 559 726
- US-A- 3 990 284
- US-A- 4 193 302
- STAHL UND EISEN, Band 10, Nr. 9, 5. Mai 1980, Seiten 474-477, Düsseldorf, DE; J. IHLEFELD et al.: "Kontinuierliche Messung des Bandtemperaturprofils am Auslauf einer Kaltwalztandemstrasse"

## Beschreibung

Die Erfindung bezieht sich auf ein Verfahren zum Erfassen von Temperaturdifferenzen zum Regeln der Planheit eines kaltgewalzten Metallbandes, insbesondere eines Dünnbandes oder einer Folie, in einem Kaltwalzwerk, mittels eines in bezug auf den Banddurchlauf hinter dem von zwei Arbeitswalzen gebildeten Walzspalt in Abstand vom Band angeordenten, die ganze Bandbreite zeilenförmig abtastenden Infrarot-Detektors zum Ermitteln von lokalen Bandtemperaturdifferenzen und zur Umwandlung der Infrarotstrahlung in elektrische Steuerimpulse zur Betätigung von den Walzspalt regelnden Mitteln. Weiter bezieht sich die Erfindung auf ein Kaltwalzwerk mit einem Infrarot-Detektor zur Durchführung des Verfahrens.

Eine ungenügende Planheit von kaltgewalzten Metallbändern wirkt sich durch die Bildung von Knicken und Buckeln aus, welche unmittelbar nach dem Walzen oder erst bei der Weiterverarbeitung des Bandes auftreten können.

Eine hinreichende Planheit von kaltgewalzten Metallbändern ist deshalb eines der wichtigsten Erfordernisse und wird bei deren Qualitätskontrolle besonders beachtet. Ungenügende Planheit kann ihren Ursprung bereits im in den Walzspalt einlaufenden Band haben, wenn dieses nicht völlig plan ist, und/oder kann durch fehlerhaftes Kaltwalzen entstehen. Im industriellen Betrieb werden oft unterschiedliche Legierungen oder gleiche Legierungen unterschiedlicher Härte zu verschiedenen Bandbreiten verwalzt, was unter anderem bezüglich der Planheit des kaltgewalzten Metallbandes immer wieder zu Problemen führt.

Eine ungenügende Planheit eines kaltgewalzten Metallbandes kann weiter folgende prozessbedingte Ursachen haben:
- Zu kleiner Anstellungsdruck, Folge davon ist die Bildung von "Längswellen"
- Unerwünschte Durchbiegung von einer oder beiden Arbeitswalzen, im Querschnitt konkave oder konvexe Metallbänder
- Stirnseitig angeordente Stellvorrichtungen mit ungenau eingestelltem Abstand, im Querschnitt keilförmig ausgebildete Metallbänder
- Falsch regulierte Sprühdüsen für das Kühlmedium, im Querschnitt unregelmässige Metallbänder
- Ungenügende Oberflächenqualität der Arbeitswalze/n, in Längs- und Querrichtung des Bandes verlaufende Unregelmässigkeiten.

Die letztgenannte Fehlerquelle kann nur durch Auswechseln der Arbeitswalze/n behoben werden, diese Variante wird im Folgenden nicht weiter betrachtet.

Die übrigen zu ungenügender Planheit führenden Parameter können durch die - früher manuelle, heute vollautomatisierte - Betätigung von Mitteln behoben werden. Diese Mittel für die aufgeführten Beispiele sind Erhöhung der Anpresskraft der Arbeitswalzen, Aenderung des Biegemoments, Verstellung von einer oder beiden stirnseitigen Stellvorrichtungen für die Arbeitswalzen und Aenderung der einer oder mehreren Düsen zugeführten Menge von Kühlmedium. Ein weiteres Mittel besteht darin, Stützwalzen mit variabler Geometrie zu verwenden, welche z.B. mit hydraulischer Druckanwendung veränderbare Ballen haben. Selbstverständlich können auch mehrere Mittel gleichzeitig durch automatisches Regeln verändert werden.

Die Deformation bzw. das Kneten des Metalls während des Kaltwalzens bewirkt eine Temperaturerhöhung, welche proportional zur Stichabnahme ist. Die Temperaturzunahme des kaltgewalzten Metallbandes ist deshalb auch ein Mass für die Verformung. Ein ungleich stark verformtes, also nicht planes Metallband ist deshalb nicht überall gleich warm. Es können lokale Temperaturunterschiede gemessen werden, wobei die Temperatur an sich weniger wichtig ist als die Temperaturdifferenzen.

Gemessene Bandtemperaturdifferenzen können in elektrische Steuerimpulse zur Betätigung der oben erwähnten, den Walzspalt und damit die Planheit des kaltgewalzten Metallbandes regelnden Mitteln umgewandelt werden.

Die aus dem Walzwerk austretenden Kaltwalzbänder strahlen, wie alle übrigen Körper, elektromagnetische Wellen ab, wobei deren Intensität von der Oberflächentemperatur abhängt. Dieses Phänomen wird Wärmestrahlung genannt, deren Wellenlänge liegt im Infrarotbereich. Mit steigender Temperatur steigt die emittierte Wärmestrahlung, welche objektspezifisch ist.

In der GB-PS 1 465 792 wird ein Verfahren zur Regelung der Planheit von Bandmaterial während des Kaltwalzens in einem Walzwerk beschrieben, welches die Temperaturmessung über die ganze Breite des sich bewegenden Bandes umfasst. Die Temperatur wird unmittelbar nach dem Walzspalt auf dem Band gemessen. Eine Infrarotkamera zur Erfassung der Wärmestrahlung setzt die gemessenen Temperaturdifferenzen in elektrische Steuerimpulse zum Einstellen eines konstanten Walzspalts um, wobei die stirnseitigen Stellvorrichtungen und/oder die Sprühdüsen für das Kühlmedium als Mittel eingesetzt werden.

Dieses Verfahren weist den erheblichen Nachteil auf, dass das Emissionsvermögen des aus dem Walzspalt austretenden Metallbandes im Infrarotbereich sehr gering ist. In bezug auf das ideale Strahlungsvermögen eines schwarzen Körpers liegt das Infrarot-Emissionsvermögen von Metallbändern lediglich im Bereich von etwa 0,05 - 0,25, je nach der Oberflächenrauhigkeit. Wegen dieses geringen Infrarot-Emissionsvermögens sind die Mess- und Regelgeräte entsprechend empfindlich einzustellen und haben einen verhältnismässig grossen Streubereich.

Aus US-A-3 559 726 und US-A-4 193 302 ist bekannt, zur Verbesserung der Temperaturmessung eines Körpers -- beispielsweise eines Drahtes -- mit geringem Emissionsvermögen die Wärme des zu messenden Objekts durch direkten Kontakt auf eine Rolle mit geringerem Reflexionsvermögen und erhöhtem Emissionsvermögen zu übertragen.

Der Erfinder hat sich die Aufgabe gestellt, ein Verfahren und eine Vorrichtung zum Erfassen von Temperaturdifferenzen zum Regeln der Planheit eines kaltgewalzten Metallbandes der eingangs genannten Art zu schaffen, welche mit höherer Genauigkeit arbeiten, aber dennoch einfach zu handhaben sind und nur geringe Mehrinvestitionen erforderlich machen.

In bezug auf das Verfahren wird die Aufgabe erfindungsgemäss durch die Merkmale von Anspruch 1 gelöst.

Das Temperaturprofil des kaltgewalzten Metallbandes wird laufend auf die Oberfläche der Kontaktrolle übertragen und kann dort mit dem Infrarot-Detektor gemessen werden. Dies bedeutet, verglichen mit der Messung der Infrarotstrahlung eines Metallbandes, welches ein hohes Reflexionsvermögen und ein niedriges Infrarot-Emissionsvermögen aufweist, eine bedeutende Verbesserung der Genauigkeit mit einfachen Mitteln.

Das Temperaturprofil des Metallbandes in Querrichtung schwankt vor der erfindungsgemässen Regelung um einige Grad Celsius, nachher nur noch um etwa 1°C, was auf eine ausserordentlich gute Planheit des kaltgewalzten Metallbandes schliessen lässt. Da für die Erzeugung der elektrischen Steuerimpulse zur Betätigung von den Walzspalt regelnden Mitteln nur Temperaturdifferenzen eine Rolle spielen, bleibt bei einer Abkühlung des Metallbandes zwischen dem Walzspalt und der Kontaktrolle das Temperaturprofil weitgehend erhalten.

Für die Identität des Temperaturprofils auf dem Metallband und auf der Kontaktrolle sind zwei Faktoren von grundlegender Bedeutung:
- Das Band muss mit hinreichenden Anpressdruck über die Kontaktrolle geführt werden, damit eine exakte Wärmeübertragung ohne Aenderung der lokalen Temperaturdifferenzen erfolgen kann, und
- das Metallband darf nicht auf der Kontaktrolle rutschen, was eine den Messwert verfälschende Erzeugung von Reibungswärme zur Folge hätte.

Zur Erzeugung eines hinreichenden Anpressdruckes wird das kaltgewalzte Metallband an der Kontaktrolle umgelenkt, bevorzugt um einen Winkel β von wenigstens 5°, insbesondere um etwa 15°. Je höher die Bandspannung ist, desto kleiner kann der Winkel β gehalten werden.

Kontrollversuche mit unmittelbar nach dem Abstellen des Walzwerks durchgeführten statischen Temperaturmessungen haben gezeigt, dass der Temperaturunterschied zwischen dem Metallband und der auf der Oberfläche der Kontaktrolle gemessenen Temperatur bei lediglich +/- 2°C lag. Das Temperaturprofil über die Bandbreite und dasjenige entlang einer Mantellinie der Kontaktrolle waren jedoch weitgehend gleich.

Weiter konnte festgestellt werden, dass sowohl bei Aluminiumlegierungen als auch beim Stahl und anderen harten Werkstoffen grössere Stichabnahmen und/oder höhere Durchlaufgeschwindigkeiten nicht nur eine wesentlich höhere Temperatur des kaltgewalzten Metallbandes zur Folge haben, sondern auch die Temperaturunterschiede in Querrichtung des Bandes grösser sind. Das erfindungsgemässe Verfahren kann auch bei diesen Varianten erfolgreich angewendet werden.

Die Intensität der Infrarotstrahlung der Kontaktrolle, welche vorn Detektor erfasst wird, ändert sich nicht exakt proportional mit der Temperatur. Weiter ändert sich die Empfindlichkeit des Infrarot-Detektors mit der Raumtemperatur. Daher kann die Temperatur der Kontaktrolle mit einem normalen Infrarot-Detektor nicht mit optimaler Genauigkeit gemessen und in elektrische Steuerimpulse umgesetzt werden. Es wird deshalb die entlang einer Mantellinie der Kontaktrolle emittierte Infrarotstrahlung mit derjenigen einer standardisierten Referenztemperaturquelle verglichen und linear korrigiert. Der zur Erfassung der Infrarotstrahlung verwendete Detektor enthält eine bevorzugt in die Kameraeinheit eingebaute, als schwarzer Körper strahlende Referenzquelle und eine Linearisierungsschaltung, um die erwähnte Korrektur zu gewährleisten.

Die von der Kontaktrolle emittierte Infrarotstrahlung wird durch die Atmosphäre zum Detektor geleitet, wobei die Strahlungsintensität wegen Absortion und Streuung durch Gase und Staubpartikel in der Atmosphäre vermindert wird. Diese Verluste sind von der Wellenlänge abhängig. Der Detektor erfasst vorzugsweise nur die Infrarotstrahlung von 3,6 - 4 und/oder 8 - 13 µm Wellenlänge, während die übrigen Wellenlängen ausgefiltert werden. In diesem bevorzugten Bereich sind die Strahlungsverluste vernachlässigbar klein.

Von den in der Beschreibungseinleitung erwähnten, über elektrische Steuerimpulse regelbaren Mitteln zur Veränderung des Walzspalts wird bevorzugt die unterschiedliche Zufuhr von Kühlmedium, insbesondere Walzöl, zu den in Längsrichtung der Arbeitswalzen angeodneten Sprühdüsen verwendet. Durch Aenderung der Menge zugeführten Kühlmediums zu einer Düse kann die Kühlung einer Arbeitswalze segmentweise geändert werden. Dabei scheinen, insbesondere bei dünnen kaltgewalzten Metallbändern, eher tribologische Effekte als die thermische Dehnung eine Veränderung des Walzspalts im betreffenden Segments zu bewirken.

In bezug auf die Vorrichtung, das Kaltwalzwerk mit einem Infrarot-Detektor zur Durchführung des Verfahrens, wird die Aufgabe erfindungsgemäss dadurch gelöst, dass wenigstens der Aussenmantel der das kaltgewalzte Metallband umlenkende/n Kontaktrolle/n aus einem schleifbaren, wenig reflektierenden Material mit einem Infrarot-Emissionsvermögen von mindestens 0,7, bezogen auf das Infrarot-Emissionsvermögen eines schwarzen Körpers, besteht/bestehen.

Die Kontaktrolle, welche auch eine Niederhalterolle für das kaltgewalzte Metallband ist, muss neben dem geringen Reflexionsvermögen und dem hohen Infrarot-Emissionsvermögen einerseits eine genügende mechanische Festigkeit aufweisen und darf andrerseits das Metallband nicht beschädigen.

Das das Temperaturprofil des Metallbandes übernehmende Material der Kontaktrolle umfasst vorzugsweise einen Kunststoff aus einem Phenolharz oder Polyurethan. Als besonders geeignet haben sich Phenolharz- Baumwoll- Hartgewebeschichten erwiesen, welche mit einer Toleranz von etwa 0,2 mm geschliffen werden können.

Damit das im Walzspalt erzeugte Temperaturprofil des kaltgewalzten Metallbands mit sehr grosser Genauigkeit auf die Kontaktrolle übertragen werden kann, ist diese möglichst benachbart dem Walzspalt angeordnet. Dabei müssen jedoch auch andere Parameter berücksichtigt werden, insbesondere die konstruktiven Anforderungen an ein Walzwerk. In der industriellen Praxis beträgt der Abstand der Kontaktrolle vom Walzspalt meist etwa 2 - 4 m. Zwischen der Kontaktrolle und dem Walzspalt befindet sich zweckmässig keine Niederhalte- oder Umlenkrolle.

Nach einer besonderen Ausführungsform des erfindungsgemässen Kaltwalzwerks kann die in bezug auf den Banddurchlauf nach der Kontaktrolle folgende, die Bandumlenkung bestimmende Umlenkrolle durch eine Planheitsrolle ersetzt sein. Mit einer Planheitsrolle wird auf individuell ausgestalteten Segmenten die radiale Spannung während des Kaltwalzens gemessen und in elektrische Steuerimpulse umgesetzt. Diese an sich bekannte Methode kann die erfindungsgemässe Messung der Infrarotstrahlung als alternative Möglichkeit ersetzen und/oder ergänzen.

Obwohl in der Regel eine Kontaktrolle eingesetzt wird, können auch mehrere Kontaktrollen mit entsprechenden Umlenkrollen hintereinander angeordnet und deren Temperaturprofil auf einer Mantellinie gemessen werden. Weitere, in Banddurchlaufrichtung angeordnete Kontaktrollen haben jedoch gegenüber der ersten Kontaktrolle eineuntergeordnete Bedeutung.

Die Erfindung wird anhand von in der Zeichnung dargestellten Ausführungsbeispielen näher erläutert. Es zeigen schematisch:
- Fig. 1 eine Prinzipskizze eines Kaltwalzwerks mit einer Kontaktrolle,
- Fig. 2 einen Vertikalschnitt durch den Bereich der Kontaktrolle im Kaltwalzwerk,
- Fig. 3 eine perspektivische Ansicht der Kontaktrolle, und
- Fig. 4 eine Momentaufnahme eines Temperaturprofils.

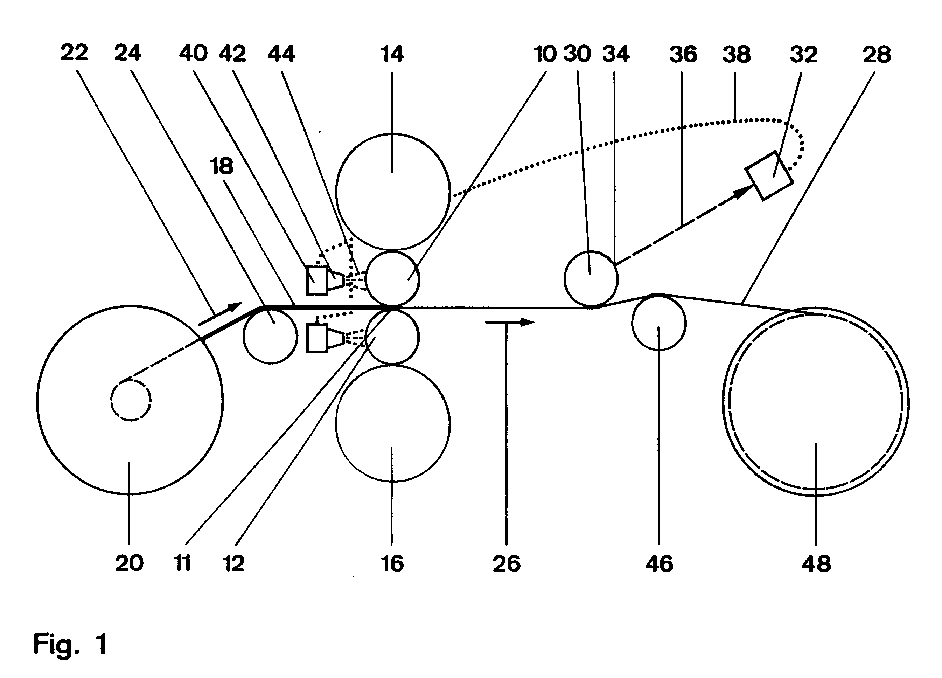

Das in Fig. 1 dargestellte Quarto-Walzwerk umfasst in bekannter Weise zwei Arbeitswalzen 10,12 mit je einer Stützwalze 14,16. Die Arbeitswalzen 10,12 bilden den Walzspalt 11, welcher mit nichtgezeigten Stellvorrichtungen einstellbar ist. Die Walzen sind, ebenfalls in bekannter Weise und nicht dargestellt, in einem Gehäuse oder einem Halterahmen auswechselbar eingebaut. Insbesondere die Arbeitswalzen 10,12 sind mit höchster Präzision fein geschliffen.

Ein warmgewalztes oder zwischengeglühtes Metallband 18, insbesondere aus einer Aluminiumlegierung oder aus Stahl, wird von der Haspel 20 in Richtung des Pfeils 22 abgewickelt und über eine Umlenkrolle 24 in den von den beiden Arbeitswalzen 10,12 gebildeten Walzspalt 11 geführt. Dort wird das relativ weiche Metallband 18 entsprechend dem eingestellten Walzspalt 11 kalt abgewalzt und in Richtung des Pfeils 26 mit einer Geschwindigkeit von etwa 25 m/sek. weitergeführt. Die Dicke der im Kaltwalzwerk abgewalzten Metallbänder 18, welche warmgewalzt oder zwischengeglüht sind, liegt vorzugsweise im Bereich von 0,5 - 2 mm. Diese Bänder werden in einem Stich oder mehreren Stichen, ggf. mit einer Zwischenglühung, kalt zu einem Metallband 28 abgewalzt, welches vorzugsweise eine Enddicke im Bereich von 0,01 - 0,5 mm hat. Die Dicke der Metallbänder 18,28 und die Stichabnahme/n richten sich neben dem Verwendungszweck nach dem Material und der Härte des in das Kaltwalzwerk eingeleiteten Metallbandes 18.

Die in einem üblichen Kaltwalzwerk als Niederhalterolle ausgebildete Kontaktrolle 30 besteht mindestens im Bereich der Oberfläche aus einer Phenolharz- Baumwoll- Hartgewebeschicht, einem Material mit niedrigem Reflexionsvermögen und hohem, im Vergleich zum schwarzen Körper bei etwa 0,9 liegendem Infrarot-Emissionsvermögen. Die Kontaktrolle 30 erfüllt auch ihre Funktion als Niederhalterolle. Ein Infrarot-Detektor 32 ist auf die Mantelfläche der Kontaktrolle 30 fokussiert und erfasst die gestrichelt dargestellte Infrarotstrahlung 36 entlang einer Mantellinie 34. Diese Mantellinie 34 ist imaginär, sie bleibt beim Drehen der Kontaktrolle 30 an Ort und Stelle.

Die im Infrarot-Detektor 32 erzeugten elektrischen Steuerimpulse werden über eine punktiert dargestellte Leitung 38 zur auf der Einlaufseite des Metallbandes 18 angeordneten Kühlvorrichtung 40 der Arbeitswalzen 10,12 geleitet. Dort regeln die elektrischen Steuerimpulse die Menge des zu den Sprühdüsen 42 zugeführten Kühlmediums 44. Jede Sprühdüse 42 besprüht einen Sektor der Oberfläche einer Arbeitswalze 10,12 und kann individuell regelbar mit Kühlmedium 44 gespeist werden.

Nach der Uebertragung des Temperaturprofils des kaltgewalzten Metallbandes 28 auf die Kontaktrolle 30 wird dieses über eine Umlenkrolle 46 geführt und dann auf der Haspel 48 aufgewickelt.

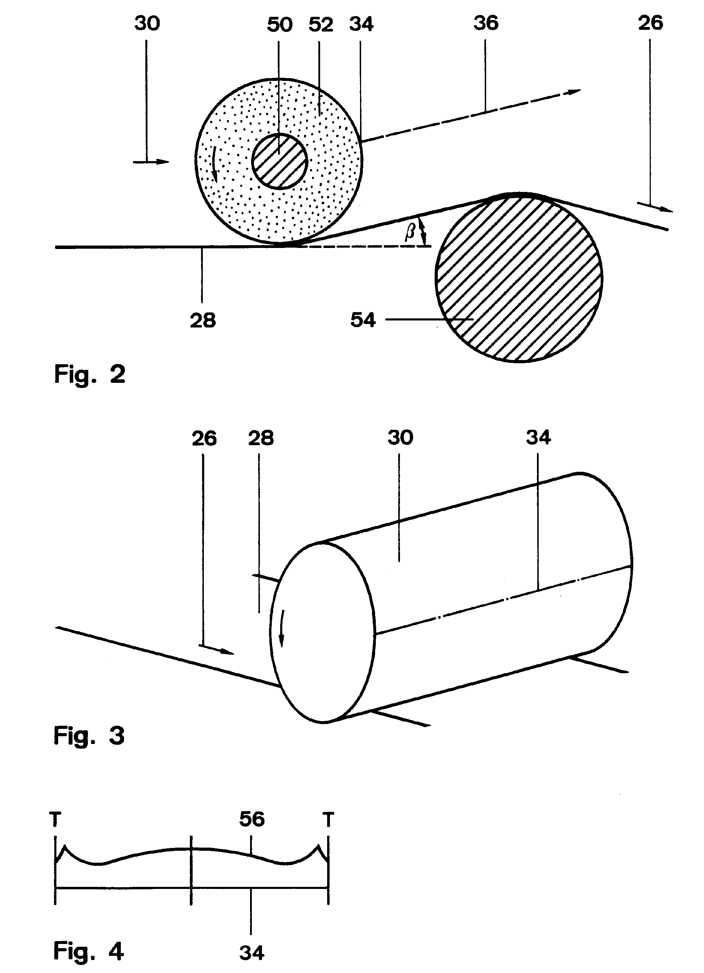

Fig. 2 zeigt die Umlenkung des kaltgewalzten Metallbandes 28 an der Kontaktrolle 30 um einen Winkel β von etwa 15°. Dadurch wird das Metallband 28 genügend an die Oberfläche der Kontaktrolle 30 gedrückt, um das im Walzspalt erhaltene Temperaturprofil auf die Oberfläche der Kontaktrolle 30 zu übertragen, und die Kontaktrolle 30 rutschfrei zu drehen. Die auf die Kontaktrolle 30 übertragenen lokalen Bandtemperaturdifferenzen drücken sich in einer unterschiedlichen Infrarotstrahlung 36 aus. Diese wird entlang einer Mantellinie der sich drehenden Kontaktrolle 30 erfasst und umgesetzt.

Die Kontaktrolle 30, welche einen Aussendurchmesser von 20 - 25 cm haben kann, setzt sich aus einem Stahlkern 50 und einer geschliffenen Mantelschicht 52 aus einer Phenolharz-Baumwoll-Hartgewebeschicht zusammen.

Die Umlenkrolle zur Bildung des Umlenkwinkels β ist als Planheitsrolle 54 ausgebildet. Diese kann alternativ oder ergänzend zur erfindungsgemässen Kontaktrolle 30 arbeiten.

Der in Fig. 3 sichtbare Bereich des Aussenmantels der Kontaktrolle 30 trägt das Temperaturprofil des daran umgelenkten kaltgewalzten Metallbandes 28. Der Infrarot-Detektor 32 (Fig. 1) ist auf die Mantellinie 34 fokussiert und erfasst die Infrarotstrahlung 36 (Fig. 1,2) der Kontaktrolle 30 im Bereich dieser Mantellinie 34 zeilenförmig.

Das in Fig. 3 gezeigte Metallband 28 wurde mit einer Stichabnahme von 50 % von 0,30 auf 0,15 mm kaltgewalzt.

Fig. 4 zeigt eine Momentaufnahme eines Temperaturprofils 56 entlang einer Mantellinie 34. Zur Verdeutlichung ist das Temperaturprofil 56 stark überhöht gezeichnet. Mit dem erfindungsgemässen Verfahren lassen sich die Abweichungen der Temperatur über die Breite eines Profils von beispielsweise 1600 mm auf weniger als 1°C reduzieren. Bei einem ungeregelt kalt abgewalzten Metallband liegen diese Temperaturschwankungen bei etwa 5 - 10°C.

Vom Beginn bis zum Ende des Kaltwalzens eines Bundes steigt die Temperatur bis etwa 10°C oder mehr. Dieser Temperaturanstieg wird durch das erfindungsgemässe Verfahren nicht beeinflusst. Bei allen Temperaturen bleibt das Temperaturprofil in Querrichtung praktisch unverändert erhalten.

Die Erfassung der Infrarotstrahlung entlang einer Mantellinie 34 erfolgt beispielsweise mit einer Frequenz von 120 Hz.

## Patentansprüche

1. Verfahren zum Erfassen von Temperaturdifferenzen zum Regeln der Planheit eines kaltgewalzten Metallbandes (28), insbesondere eines Dünnbandes oder einer Folie, in einem Kaltwalzwerk, mittels eines in bezug auf den Banddurchlauf hinter dem von zwei Arbeitswalzen (10,12) gebildeten Walzspalt (11) in Abstand vom Metallband (28) angeordneten, die ganze Bandbreite zeilenförmig abtastenden Infrarot-Detektors (32) zum Ermitteln von lokalen Bandtemperaturdifferenzen und zur Umwandlung der Infrarotstrahlung (36) in elektrische Steuerimpulse zur Betätigung von den Walzspalt (11) regelnden Mitteln,
dadurch gekennzeichnet,
dass das aus dem Walzspalt (11) austretende Metallband (28) an mindestens einer als Niederhalterolle fungierenden Kontaktrolle (30) mit geringem Rückstrahlvermögen und hohem Infrarot-Emissionsvermögen über Umlenkrolle/n (46) rutschfrei umgelenkt, und die Infrarotstrahlung (36) der Kontaktrolle/n (30) entlang einer Mantellinie (34) erfasst und in Steuerimpulse zur Betätigung von Mitteln umgewandelt wird, wobei die Infrarotstrahlung (36) der Kontaktrolle (30) im Infrarot-Detektor (32) laufend mit einer Referenz-Infrarotstrahlung eines schwarzen Körpers verglichen und zum Ausgleich der nicht proportionalen Temperaturabhängigkeit und von Schwankungen in der Raumtemperatur linear korrigiert wird.

2. Verfahren nach Anspruch 1, dadurch gekennzeichnet, dass das kaltgewalzte Metallband (28) an der Kontaktrolle (30) um einen Winkel (β) von wenigstens 5°, vorzugsweise etwa 15°, umgelenkt wird.

3. Verfahren nach einem der Ansprüche 1 oder 2, dadurch gekennzeichnet, dass vom Infrarot-Detektor (32) nur die Infrarotstrahlung von 3,6 - 4 und/oder 8 - 13 µm Wellenlänge erfasst und die übrigen Wellenlängen ausgefiltert werden.

4. Verfahren nach einem der Ansprüche 1 bis 3, dadurch gekennzeichnet, dass die über in Längsrichtung der Arbeitswalzen (10,12) angeordnete Sprühdüsen (42) zugeführte Menge von Kühlmedium (44) geregelt wird.

5. Kaltwalzwerk mit wenigstens zwei Arbeitswalzen (10, 12), zwei Umlenkrollen (24, 46), eines Niederhalterolle (30), sowie mit einem Infrarot-Detektor (32) zur Durchführung des Verfahrens nach einem der Ansprüche 1 bis 4, dadurch gekennzeichnet, dass der Infrarot-Detektor (32) eine als schwarzer Körper strahlende Referenzquelle sowie eine Linearisierungsschaltung aufweist und wenigstens der Aussenmantel der das kaltgewalzte Metallband (28) umlenkende/n Kontaktrolle/n (30) aus einem schleifbaren, wenig reflektierenden Material mit einem Infrarot-Emissionsvermögen von mindestens 0,7, bezogen auf das Infrarot-Emissionsvermögen eines schwarzen Körpers, besteht/bestehen.

6. Kaltwalzwerk nach Anspruch 5, dadurch gekennzeichnet, dass das Material der Kontaktrolle (30) aus einem Kunststoff aus einem Phenolharz- Baumwoll- Hartgewebeschicht, oder aus Polyurethan bestehen.

7. Kaltwalzwerk nach Anspruch 5 oder 6, dadurch gekennzeichnet, dass die Kontaktrolle (30) einen Stahlkern (50) und eine Mantelschicht (52) aus einem wenig reflektierenden, stark Infrarotstrahlung emittierenden Material umfasst und einen Aussendurchmesser von vorzugsweise 20 - 25 cm hat.

8. Kaltwalzwerk nach einem der Ansprüche 5 bis 7, dadurch gekennzeichnet, dass die Kontaktrolle (30) möglichst nahe am Walzspalt (11) und ohne vorgeschaltete Niederhalte- oder Umlenkrolle (46) angeordnet ist.

9. Kaltwalzwerk nach einem der Ansprüche 5 bis 8, dadurch gekennzeichnet, dass die in bezug auf den Banddurchlauf nach der Kontaktrolle (30) folgende, die Bandumlenkung bestimmende Umlenkrolle (46) durch eine auch diese Funktion erfüllende Planheitsrolle (54) ersetzt ist.

## Revendications

1. Procédé de détection des différences de température en vue de la régulation de la planéité d'une bande de métal (28) laminée à froid, notamment d'une bande mince ou d'une feuille, dans un laminoir à froid, au moyen d'un détecteur infrarouge (32) disposé en aval de l'emprise (11) formée par deux cylindres de travail (10, 12) par rapport à la passe de la bande, à distance de la bande de métal (28), et balayant toute la largeur de la bande en lignes pour déterminer les différences de température localisées sur la bande et transformer le rayonnement infrarouge (36) en impulsions électriques de commande destinées à actionner des moyens de régulation de l'emprise (11),
caractérisé en ce que,
la bande de métal (28) sortant de l'emprise (11) est déviée en l'absence de glissement au niveau d'au moins un rouleau contacteur (30) faisant fonction de rouleau presse-tôle à pouvoir de réflexion faible et pouvoir d'émission infrarouge élevé par un ou des rouleaux de déviation (46) et que le rayonnement infrarouge (36) du ou des rouleaux contacteurs (30) est détecté suivant une génératrice (34) et est transformé en impulsions de commande en vue de l'actionnement de moyens, le rayonnement infrarouge (36) du rouleau contacteur (30) étant continûment comparé à l'intérieur du détecteur infrarouge (32) avec un rayonnement infrarouge de référence d'un corps noir et corrigé linéairement pour compenser la variabilité non proportionnelle avec la température et les fluctuations de la température ambiante.

2. Procédé selon la revendication 1, caractérisé en ce que la bande de métal (28) laminée à froid est déviée au niveau du rouleau contacteur (30) d'un angle (β) d'au moins 5°, de préférence d'environ 15°.

3. Procédé selon une des revendications 1 ou 2, caractérisé en ce que le détecteur infrarouge (32) ne détecte que le rayonnement infrarouge de longueur d'onde comprise entre 3,6 et 4 et/ou 8 et 13 µm et que les autres longueurs d'onde sont filtrées.

4. Procédé selon une des revendications 1 à 3, caractérisé en ce que la quantité de réfrigérant (44) acheminée par des pulvérisateurs (42) disposés dans le sens longitudinal des cylindres de travail (10, 12) est régulée.

5. Laminoir à froid comportant au moins deux cylindres de travail (10, 12), deux rouleaux de déviation (24, 46), un rouleau presse-tôle (30), ainsi qu'un détecteur infrarouge (32), destiné à la mise en oeuvre du procédé selon une des revendications 1 à 4, caractérisé en ce que le détecteur infrarouge (32) présente une source rayonnante de référence ayant la forme d'un corps noir et un circuit de linéarisation et en ce qu'au moins l'enveloppe externe du ou des rouleaux contacteurs (30) déviant la bande de métal (28) laminée à froid est en un matériau peu réfléchissant, polissable, ayant un pouvoir d'émission infrarouge d'au moins 0,7, par rapport au pouvoir d'émission infrarouge d'un corps noir.

6. Laminoir à froid selon la revendication 5, caractérisé en ce que le matériau du rouleau contacteur (30) est une matière plastique composée d'une couche de résine phénolique-coton-tissu bakélisé ou de polyuréthanne.

7. Laminoir à froid selon la revendication 5 ou 6, caractérisé en ce que le rouleau contacteur (30) comprend une âme en acier (50) et une couche enveloppante (52) en un matériau peu réfléchissant, émettant un fort rayonnement infrarouge et a un diamètre externe compris de préférence entre 20 et 25 cm.

8. Laminoir à froid selon une des revendications 5 à 8, caractérisé en ce que le rouleau contacteur (30) est disposé aussi près que possible de l'emprise (11) et n'est pas précédé d'un rouleau presse-tôle ou rouleau de déviation (46).

9. Laminoir à froid selon une des revendications 5 à 8, caractérisé en ce que le rouleau de déviation (46) faisant suite au rouleau contacteur (30) par rapport à la passe de la bande et déterminant la déviation de la bande est remplacé par un rouleau de planéité (54) assumant également cette fonction.

## Claims

1. Method for detecting temperature differences for controlling the flatness of a cold-rolled metal strip (28), especially a thin strip or a foil, in a cold rolling mill by means of an infrared detector (32) arranged at a distance from the metal strip (28) and, with respect to the strip throughput, behind the roll nip (11) formed by two work rolls (10, 12) and scanning the entire width of the strip in a linear manner, for detecting local temperature differences in the strip and for converting the infrared radiation (36) into electrical control pulses for actuating means controlling the roll nip (11), characterised in that the metal strip (28) emerging from the roll nip (11) is deflected in a slip-free manner via deflection roll/s (46) by at least one contact roll (30) with low reflectivity and high infrared emissivity and acting as a hold-down roll, and the infrared radiation (36) of the contact roll/s (30) is detected along a generating line (34) and is converted into control pulses for actuating means, the infrared radiation (36) of the contact roll (30) being continuously compared in the infrared detector (32) with a reference infrared radiation of a black body and being corrected in a linear manner to compensate for the non-proportional temperature dependence and for variations in the room temperature.

2. Method according to claim 1, characterised in that the cold-rolled metal strip (28) is deflected by the contact roll (30) by an angle (β) of at least 5°, preferably approximately 15°.

3. Method according to one of claims 1 and 2, characterised in that only the infrared radiation having a wavelength of 3.6 - 4 and/or 8 - 13 µm is detected by the infrared detector (32) and the other wavelengths are filtered out.

4. Method according to one of claims 1 to 3, characterised in that the quantity of cooling medium (44) supplied to spray nozzles (42) arranged in the longitudinal direction of the work rolls (10, 12) is controlled.

5. Cold rolling mill with at least two work rolls (10, 12), two deflection rolls (24, 46), a hold-down roll (30) and an infrared detector (32) for carrying out the method according to one of claims 1 to 4, characterised in that the infrared detector (32) has a reference source radiating as a black body and a linearisation circuit, and at least the outer shell of the contact roll/s deflecting the cold-rolled metal strip (28) consists of a grindable material with low reflectivity and infrared emissivity of at least 0.7 with respect to the infrared emissivity of a black body.

6. Cold rolling mill according to claim 5, characterised in that the material of the contact roll (30) consists of a plastic of a phenolic resin/cotton laminated fabric layer or of polyurethane.

7. Cold rolling mill according to claim 5 or claim 6, characterised in that the contact roll (30) includes a steel core (50) and an outer layer (52) of a material with low reflectivity and emitting a high degree of infrared radiation and has an outer diameter of preferably 20 - 25 cm.

8. Cold rolling mill according to one of claims 5 to 7, characterised in that the contact roll (30) is arranged as close as possible to the roll nip (11) without any intermediate hold-down or deflection roll (46).

9. Cold rolling mill according to one of claims 5 to 8, characterised in that the deflection roll (46) following the contact roll (30) with respect to the strip throughput and defining the strip deflection is replaced by a flatness roll (54) also fulfilling this function.
